# EUROPÄISCHE PATENTANMELDUNG

(11) **EP 1 854 671 A2**
(43) Veröffentlichungstag der Anmeldung: **14.11.2007**
(21) Anmeldenummer: 07007512.2
(22) Anmeldetag: 12.04.2007
(51) Int. Cl.: B60R 5/04, B60R 13/01

(54) **Laderaumsystem**

(30) Priorität: 12.04.2006 LU 91233; 21.06.2006 DE 202006009853 U
(71) Anmelder: Hohenstein, Milena, 4042 Esch sur Alzette (LU)
(72) Erfinder: Hohenstein, Milena, 4042 Esch sur Alzette (LU)

(57) **Zusammenfassung**

Ein erfindungsgemäßes Laderaumsystem für ein Kraftfahrzeug, das einen Laderaumboden, sowie zwei einander gegenüberliegende Seitenverkleidungen aufweist, umfasst seitliche Haltevorrichtungen zum Befestigen an jeweils einer Seitenverkleidung; sowie eine frontseitige Laderaumabtrennung zum Befestigen am Laderaumboden.

## Beschreibung

Die Erfindung betrifft ein Laderaumsystem für ein Kraftfahrzeug mit einem Laderaumboden sowie mit zwei einander gegenüberliegenden Seitenverkleidungen.

### Stand der Technik

Aus dem Stand der Technik sind verschiedene System zum Unterteilen des Laderaums eine Kraftfahrzeugs bekannt. Diese bekannten System sind jedoch nicht universell einsetzbar, d.h. sie sind entweder nicht oder nicht ohne großen Aufwand den Abmessungen der zu transportierenden Objekte anpassbar. Darüber hinaus sind die bekannten Systeme aufgrund der für die Verkehrssicherheit geforderten Stabilität in Verbindung mit den üblichen Abmessungen von Kraftfahrzeugen sehr schwer und von einer Einzelperson entweder gar nicht oder nur mit großen Anstrengungen handhabbar.

Des weiteren ist es jedoch insbesondere für den Transport von lebenden Haustieren unabdingbar, dass zur Vermeidung von Verletzungen für jedes Tier ein eigener, abgetrennter Transportraum zur Verfügung gestellt wird. Dabei muss sowohl der Sicherheit des Tieres, bzw. der Tiere, als auch der Sicherheit der menschlichen Passagiere Rechnung getragen werden. Außerdem ist es wünschenswert, den Laderaum je nach Anzahl und Größe der zu transportierenden Objekte bzw. Tiere entsprechend einteilen zu können.

Die herkömmlichen System zum Unterteilen des Laderaums tragen diesen Anforderung jedoch nur ungenügend Rechnung.

Es ist deshalb Aufgabe der vorliegenden Erfindung, ein Laderaumsystem für ein Karaftfahrzeug zu schaffen, das die oben genannten Nachteile überwindet.

Die der Erfindung zugrunde liegende Aufgabe wird durch ein Laderaumsystem nach Anspruch 1 gelöst.

Weitere vorteilhafte Ausgestaltungen sind den abhängigen Ansprüchen zu entnehmen.

Ein erfindungsgemäßes Laderaumsystem für ein Kraftfahrzeug, das einen Laderaumboden, sowie zwei einander gegenüberliegende Seitenverkleidungen aufweist, umfasst seitliche Haltevorrichtungen zum Befestigen an jeweils einer Seitenverkleidung; sowie eine frontseitige Laderaumabtrennung zum Befestigen am Laderaumboden.

In einer weiteren Ausgestaltung umfassen die seitlichen Haltevorrichtungen Mittel zum Befestigen von Laderaumunterteilungen.

In einer weiteren Ausgestaltung umfassen die Laderaumunterteilungen weitere Mittel zum Befestigen von weiteren Unterteilungsmitteln.

In einer weiteren Ausgestaltung sind mindestens die Laderaumunterteilungen und/oder weiteren Unterteilungsmittel aus formstabilem Material geformt sind.

In einer weiteren Ausgestaltung ist das formstabile Material Pappelsperrholz.

In einer weiteren Ausgestaltung sind in den seitlichen Haltevorrichtungen Fächer zur Aufbewahrung von Objekten vorgesehen.

In einer weiteren Ausgestaltung sind die Fächer mit Sicherungsmitteln ausgestattet, die verhindern, dass während der Fahrt des Kraftfahrzeugs die in den Fächern aufbewahrten Objekte herausfallen können.

In einer weiteren Ausgestaltung umfassen ist die frontseitige Laderaumabtrennung als Sitzbank(8) mit dem Laderaum zugewandter Rückenlehne ausgerührt.

In einer weiteren Ausgestaltung ist ein Rückhaltenetz so ausgeführt dass es hinter der Rückenlehne vom Laderaumboden bis zur Decke des Laderaums reicht.

In einer weiteren Ausgestaltung umfasst das Laderaumsystem rückwärtige Abschlusswände, die zum rückwärtigen Abschließen der von den Unterteilungsmitteln und/oder weiteren Unterteilungsmitteln umfassten Räume geeignet sind.

Die vorliegende Erfindung ist besonders vorteilhaft ausgeführt als Umbau- oder Nachrüstsatz für Kratfahrzeuge, insbesondere für so genannt Mini-Campingwagen. Bei anderen Ausführungsbeispielen der vorliegenden Erfindung sind entsprechende Laderaumsysteme auch für andere Arten von Kraftfahrzeugen, insbesondere für Kombifahrzeuge, Grossraumlimousinen, Transporter oder ähnliches vorgesehen.

Bei dem für das System verwendeten Material handelt es sich um ein besonders leichtes und formstabiles Material, beispielsweise Pappelsperrholz, das vorzugsweise kratzfest beschichtet ist, so dass auch ohne großen körperliche Anstrengung das Einsetzen oder Entfernen der Unterteilungen möglich ist. Vorteilhafterweise wird der Laderaum zum Passagierraum durch eine Sitzbank abgetrennt. Diese Sitzbank ist ihrerseits vorteilhafterweise als Schlafsitzbank ausgeführt, so dass nach Entfernen sämtlicher Unterteilungen des Laderaums ein vollständig flaches Ausbreiten der Liegefläche der Schlafsitzbank in den Laderaum hinein möglich ist.

Der Umbau- oder Nachrüstsatz ist vorzugsweise als Baukastensystem ausgeführt, so dass er innerhalb der vorgegebenen Möglichkeiten beliebig konfigurierbar ist.

Weiter Vorteile und Merkmale der Erfindung ergeben sich aus den Ansprüchen sowie aus der nachfolgenden Beschreibung von bevorzugten Ausführungsbeispielen der Erfindung, die anhand der folgend Zeichnungen dargestellt sind:
Fig. 1 zeigt einen Längsschnitt eines herkömmlichen Kraftfahrezeugs.
Fig. 2 zeigt einen Querschnitt eines mit dem erfindungsgemäßen Laderaumsystem ausgerüstenten Kraftfahrzeugs.
Fig. 3 zeigt einen Längsschnitt durch ein mit dem erfindungsgemäßen Laderaumsystem ausgerüsteten Kraftfahrzeug.
Fig. 4 zeigt einen weiteren Längsschnitt durch ein mit dem erfindungsgemäßen Laderaumsystem ausgerüsteten Kraftfahrzeug.
Fig. 5 zeigt einen weiteren Querschnitt durch ein mit dem erfindungsgemäßen Laderaumsystem ausgerüsteten Kraftfahrzeug.
In Fig. 6 ist ein weiterer Längsschnitt durch ein mit dem erfindungsgemäßen Laderaumsystem ausgerüstetes Kraftfahrzeug gezeigt.
In Fig. 7 ist ein weiterer Querschnitt durch ein mit dem erfindungsgemäßen Laderaumsystem ausgerüstetes Kraftfahrzeug gezeigt.
In Fig. 8 ist ein weiterer Querschnitt durch ein mit dem erfindungsgemäßen Laderaumsystem ausgerüstetes Kraftfahrzeug gezeigt.
In Fig. 9 ist ein weiterer Querschnitt durch ein mit dem erfindungsgemäßen Laderaumsystem ausgerüstetes Kraftfahrzeug gezeigt.

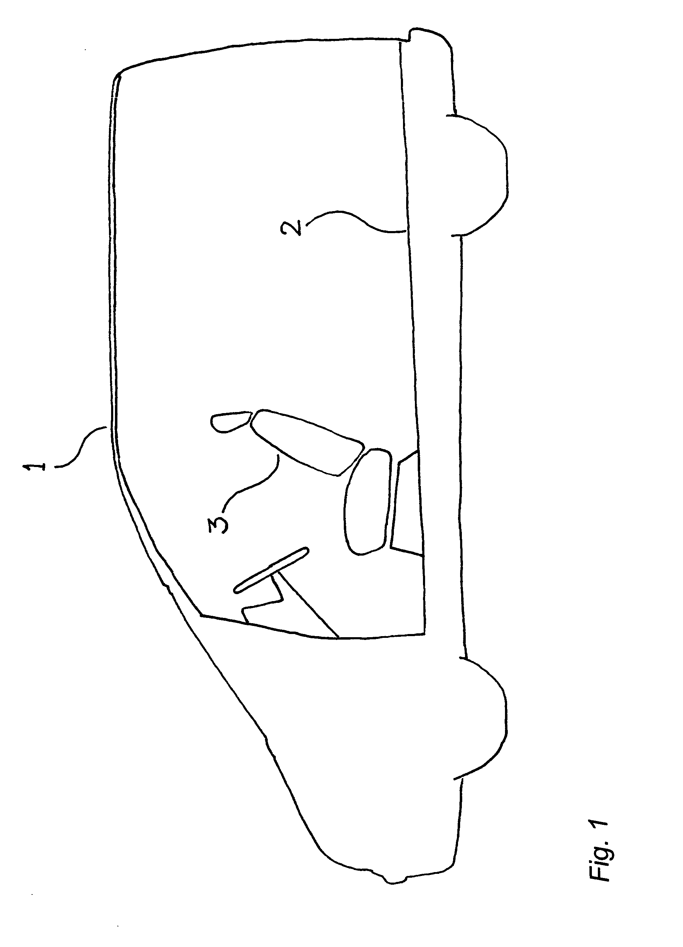

Ein Kraftfahrzeug nach den Fig. 1 bis 9 weist einen Laderaum 2 auf, der in Fahrtrichtung gesehen nach vorne durch eine Schlafsitzbank und rückwärtig durch eine Hecktür begrenzt ist. An den Fahrzeugseiten ist der Laderaum durch Seitenverkleidungen begrenzt, die beim dargestellten Ausführungsbeispiel sich vertikal und in Fahrzeuglängsrichtung erstrecken und somit einander parallel gegenüberliegen. Die Seitenverkleidungen sind jeweils eben gestaltet, so dass sich eine im wesentlichen quaderförmige Laderaumkapazität für den Laderaum ergibt.

Der anhand der Fig. 1 bis 9 dargestellte Laderaum stellt einen Laderaum eines Personenkraftwagens mit einer Hecktür oder -klappe dar.

In Fig. 1 ist ein Längsschnitt eines handelsüblichen Kraftfahrzeugs 1 in Längsrichtung gezeigt. Der Laderaumboden 2 erstreckt sich vom Fahrersitz 3 aus bis zu den (hier der Übersichtlickeit halber nicht gezeigten) Türen am Heck des Fahrzeugs. Der Laderaum wir nach oben von einer Decke 21 begrenzt.

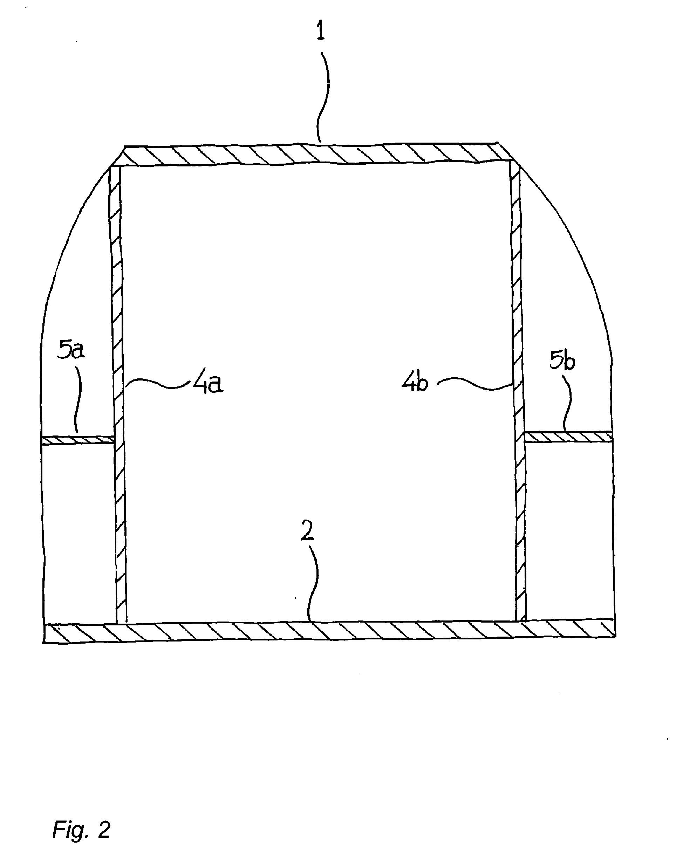

Wie in Fig. 2 als Querschnitt vom Heck des Kraftfahrzeugs 1 aus gesehen gezeigt, ist auf der Fahrerseite eine seitliche Haltevorrichtung 4a zur Begrenzung des Laderaums vorgesehen. Eine entsprechende Haltevorrichtung 4b befindet sich an der Beifahrerseite des Kraftfahrzeugs. Die seitlichen Haltevorrichtungen werden in geeigneter Form mit den Seitenverkleidungen des Kraftfahrzeugs verbunden. Erforderlichenfalls können die Haltevorrichtungen 4a, 4b beispielsweise mittels Versteifungen oder Streben 5a bzw. 5b am Aufbau des Kraftfahrzeugs 1 befestigt werden. Eine weitere Befestigung der seitlichen Haltevorrichtungen am Laderaumboden 2 und/oder der Laderaumdecke kann ebenfalls vorgesehen werden. In einer bevorzugten Ausführung bestehen die Haltevorrichtungen aus 15 mm starkem Graffiti-Schichtstoff, bzw. Pappelsperrholz.

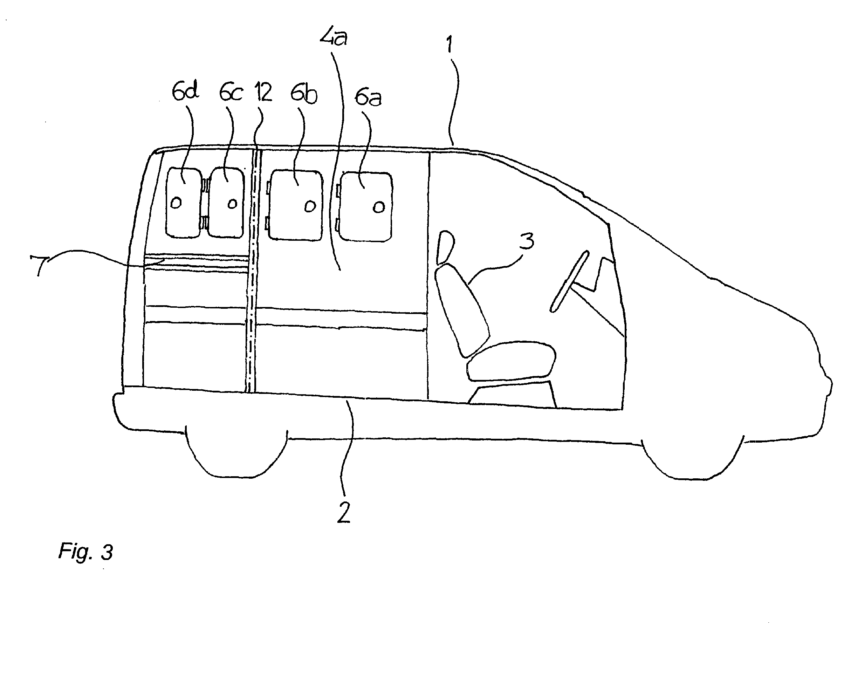

In Fig. 3 ist ein Beispiel für ein mit einer erfindungsgemäßen seitlichen Haltevorrichtung 4b ausgestattetes Kraftfahrzeug 1 an Hand eines Längsschnittes dargestellt. In diesem Ausführungsbeispiel ist die seitliche Haltevorrichtung 4b als Seitenwand ausgeführt. In der Seitenwand sind (hier nicht im Detail gezeigte) Aufbewahrungsfächer vorgesehen, die mit Türen 6a, 6b, 6c und 6d verschlossen werden können.

Es erschließt sich jedoch dem Fachmann, dass die erfindungsgemäße Ausführung der seitlichen Haltevorrichtungen 4a, 4b nicht auf geschlossene Seitenwände beschränkt ist. Insbesondere können beispielsweise auch Verstrebungen oder andere geeignete Halterungen zum Einsatz kommen.

Des weiteren sind an den seitlichen Haltevorrichtungen 4a und 4b Mittel 7 vorgesehen, mit denen Laderaumunterteilungen an den seitlichen Haltevorrichtungen befestigt werden können.

Bei Kraftfahrzeugen mit einer seitlichen Tür im Bereich des Laderaums wird zweckmäßigerweise die türseitige Haltevorrichtung 4a oder 4b den Maßen der Tür angepasst, um ungehinderten Zugang zum Laderaum zu ermöglichen.

Außerdem kann ein Rückhaltenetz 12 vorgesehen werden, welches zwischen Laderaum und Passagierraum vertikal vom Boden 2 des Laderaums zur Decke desselben verläuft. Hierdurch wird eine sichere, aber luftdurchlässige Abrennung zwischen Passagierraum und Laderaum bewirkt.

Optional kann ein weiteres Rückhaltenetz direkt hinter dem Fahrer- bzw. Beifahrersitz vorgesehen werden.

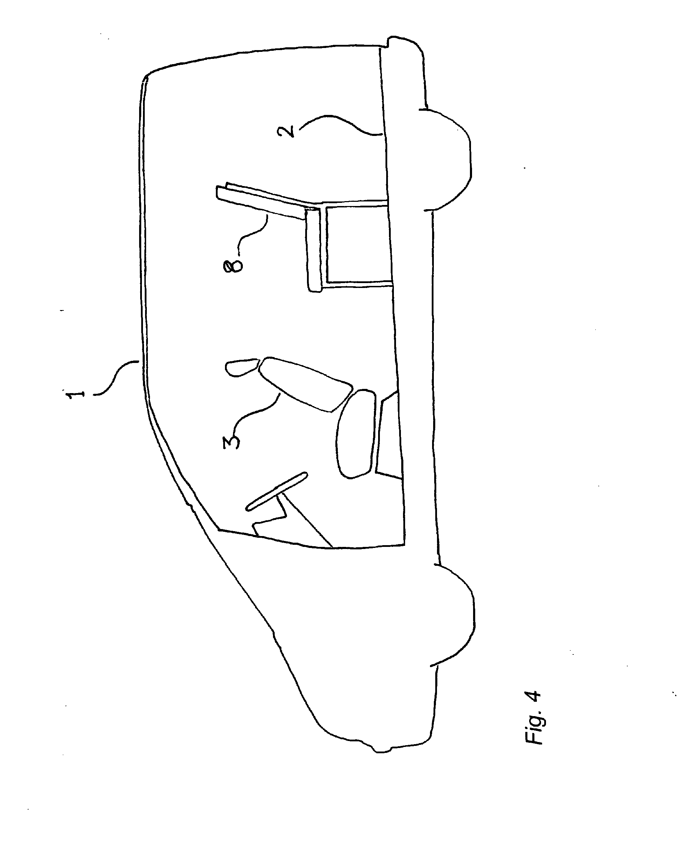

Wie in Fig. 4 gezeigt, kann eine Sitzbank 8 zur Abgrenzung des Laderaums vom Passagierraum am Laderaumboden 2 befestigt werden. Vorzugsweise handelt es sich bei dieser Sitzbank um eine Schlaf-Sitzbank, die innerhalb des Laderaums zu einer ebenen Liegefläche ausgebreitet werden kann. In einer weiteren bevorzugten Ausführung ist ein Rückhaltenetz so ausgeführt, dass es vom Laderaumboden bis zur Decke des Laderaums reicht, und somit den Laderaum hinter der Sitzbank vollständig vom Passagierraum abtrennt.

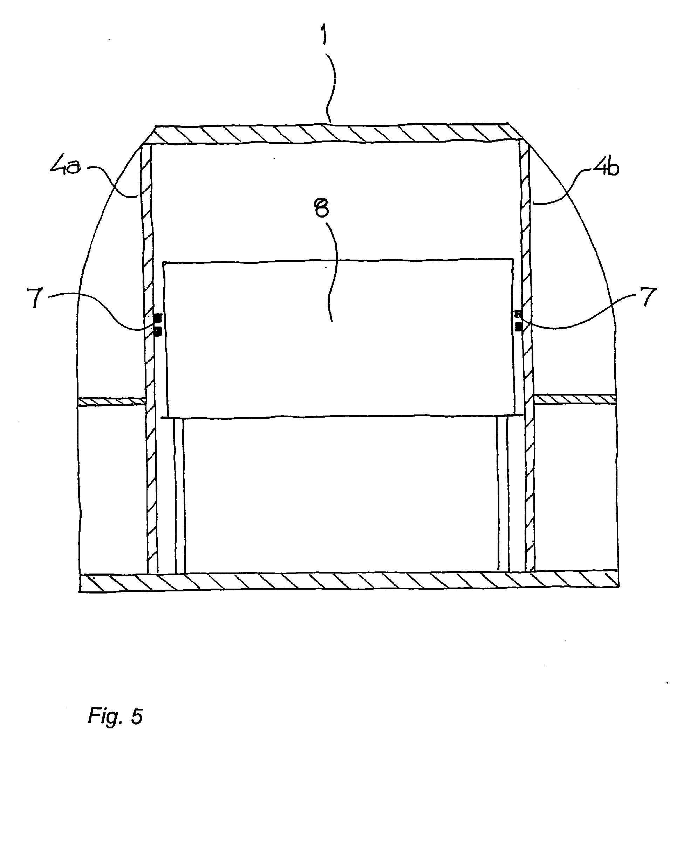

In Fig. 5 ist die Sitzbank 8 als frontseitige Abgrenzung des Laderaums eingesetzt. Zum Befestigen einer Laderaumunterteilung sind Mittel 7 an den seitlichen Haltevorrichtungen 4a und 4b vorgesehen. In einer bevorzugten Ausführungsform werden die Befestigungsmittel 7 als Verbindungsprofil ausgeführt. In einer vorteilhaften Ausgestaltung bestehen die Verbindungsprofile aus Kunststoff, was ein leichtgängiges Gleiten der Laderaumunterteilungen beim Einsetzen und Herausnehmen ermöglicht.

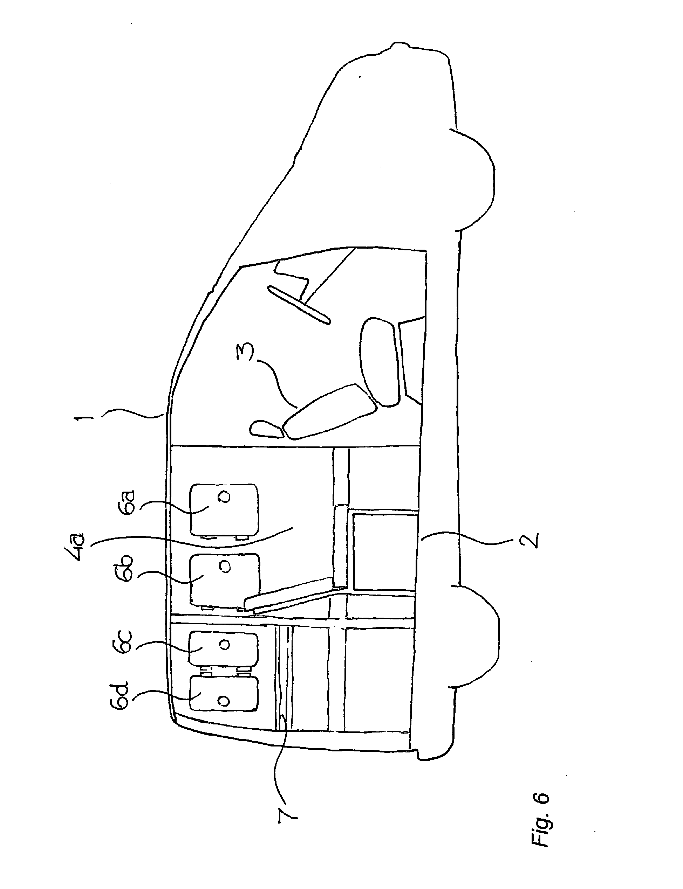

Fig. 6 zeigt einen Längsschnitt durch ein Kraftfahrzeug, das mit einem erfindungsgemäßen Laderaumsystem ausgerüstet ist. In diesem Ausführungsbeispiel ist die seitliche Haltevorrichtung 4b als Seitenwand ausgeführt. In der Seitenwand 4b sind (hier nicht gezeigte) Aufbewahrungsfächer vorgesehen, die mit Türen 6a, 6b, 6c und 6d verschlossen werden können. Außerdem ist eine Sitzbank 8 zur Abgrenzung des Laderaums vom Passagierraum vorgesehen und am Laderaumboden 2 befestigt. Vorzugsweise handelt es sich bei dieser Sitzbank um eine Schlaf-Sitzbank, die innerhalb des Laderaums entlang von an den Seitenwänden 4a, 4b ausgebildeten Führungsspuren zu einer ebenen Liegefläche ausgebreitet werden kann.

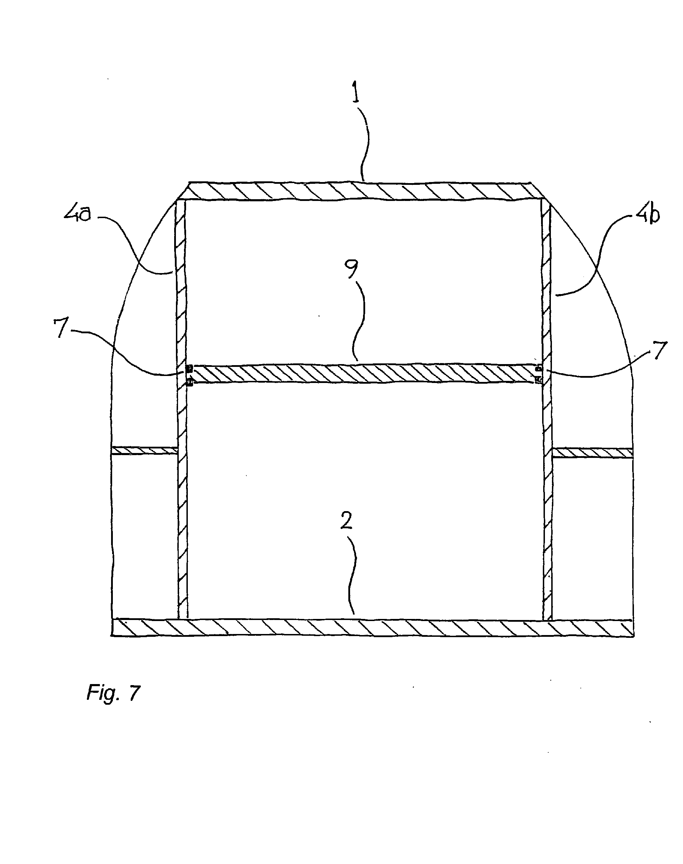

In Fig. 7 ist ein Querschnitt des mit dem erfindungsgemäßen Laderaumssystem ausgerüsteten Kraftfahrzeug 1 gezeigt. Zwischen den seitlichen Haltevorrichtungen 4a und 4b ist über die Mittel 7 eine Laderaumunterteilung 9 befestigt. Die Laderaumunterteilung 9 ist vorzugsweise aus einem leichten und formstabilen Material, beispielsweise Pappelsperrholz, das vorzugsweise kratzfest beschichtet ist, hergestellt, so dass auch ohne große körperliche Anstrengung das Einsetzen oder Entfernen der Laderaumunterteilungen 9 möglich ist.

Die Befestigung der Unterteilungsmittel 9 an den seitlichen Haltevorrichtungen 4a, 4b geschieht vorzugsweise in stabiler, aber lösbarer Form, d.h. beispielsweise mittels Schienen und Zapfen, Nut und Stift, Schrauben, Steckverbinder oder Rastverbinder, Klettverbindungen, usw.

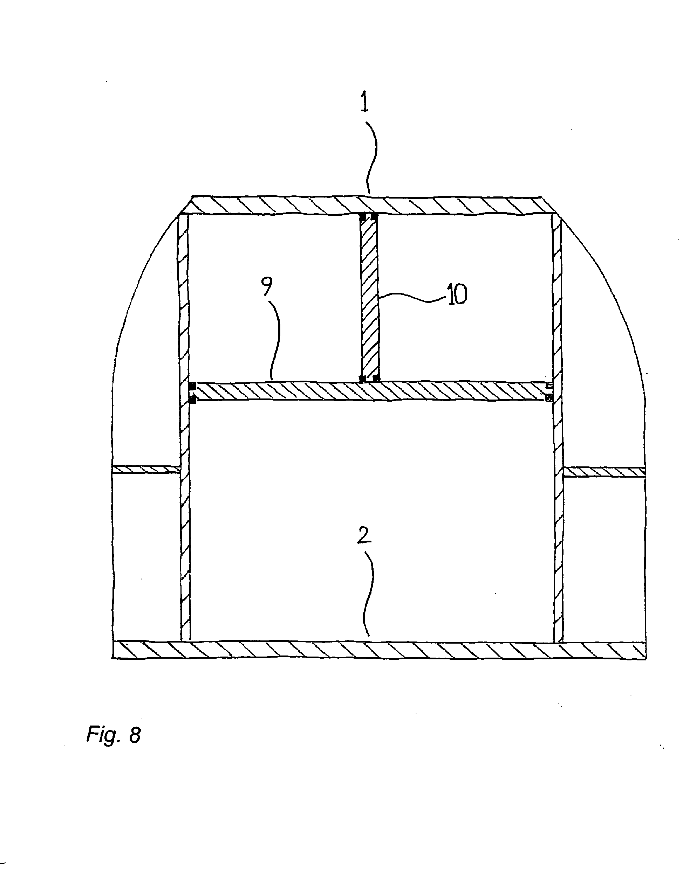

Wie in Fig. 8 gezeigt, kann eine weitere Laderaumunterteilung 10 zwischen der Decke des Kraftfahrzeugs und dem eingelegten Laderaumunterteilung 9 befestigt werden. Die eventuell vorgesehenen weiteren Unterteilungsmittel werden vorzugsweise in gleicher Form mit den an den seitlichen Haltevorrichtungen befestigten Unterteilungsmitteln verbunden.

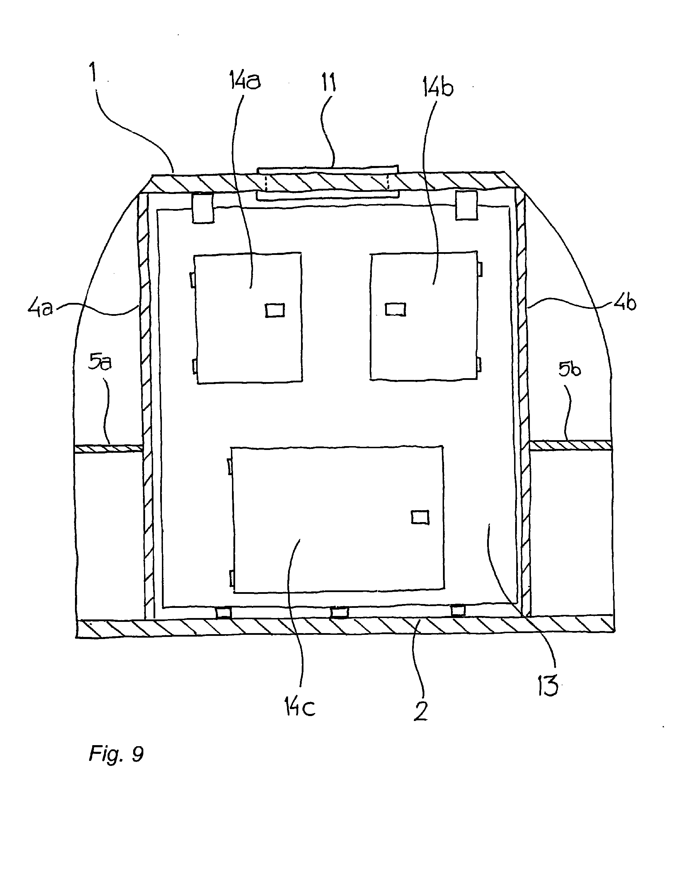

Fig. 9 schließlich zeigt den heckseitigen Abschluss des durch das Laderaumssystem unterteilten Laderaums durch eine Rückwand 13. In dieser Rückwand sind zum Be- und Entladen der verschiedenen Abteilungen des Laderaumsystems Türen 14a, 14b, 14c vorgesehen. Wenn das Laderaumsystem für den Transport von Tieren, insbesondere von Haustieren, verwendet wird, ist es vorteilhaft die Türen mit einer Lüftung zu versehen, z.B. mit geeigneter Lochung oder Lochblech. Bei Lebendtransporten ist es weiterhin vorteilhaft, auch den Rest der Rückwand mit einer Lüftung auszustatten, wobei auch hier eine entsprechende Lochung oder Lochblech verwendet wird. Zur Stabilisierung der Rückwand wird diese bevorzugterweise auf einem Rahmen aus z.B. Aluminiumrohr befestigt. Durch diese Ausgestaltung der Rückwand ist es möglich, bei stehendem Fahrzeug die Hecktüren zu öffnen, um den transportierten Tieren Kühlung zu verschaffen, ohne die Türen des Laderaumsystems öffnen zu müssen.

Darüberhinaus kann eine Ventilationsvorrichtung 11 vorgesehen werde, die das Fahrzeug im Stand belüftet. Hierbei kann es sich um eine aktive oder passive Ventilation handeln, wobei die aktive Ventilation durch einen elektrisch betriebenen Ventilator bewirkt wird. Vorteilhafterweise wird der Ventilator in einer Dachhaube im Dach des Kraftfahrzeugs angeordnet.

## Patentansprüche

1. Laderaumsystem für ein Kraftfahrzeug (1), das einen Laderaumboden(2), sowie zwei einander gegenüberliegende Seitenverkleidungen aufweist,
**dadurch gekennzeichnet, dass** das Laderaumsystem umfasst:
seitliche Haltevorrichtungen (4a, 4b) zum Befestigen an jeweils einer Seitenverkleidung; sowie
eine frontseitige Laderaumabtrennung (8) zum Befestigen am Laderaumboden (2)

2. Laderaumsystem nach Anspruch 1, wobei die seitlichen Haltevorrichtungen (4a, 4b) Mittel (7) zum Befestigen von Laderaumunterteilungen (9) aufweisen.

3. Laderaumsystem nach Anspruch 2, wobei die Laderaumunterteilungen (9) weitere Mittel (7) zum Befestigen von weiteren Unterteilungsmitteln (10) aufweisen.

4. Laderaumsystem nach einem der Ansprüche 2 oder 3, wobei mindestens die Laderaumunterteilungen (9) und/oder weiteren Unterteilungsmittel (10) aus formstabilem Material geformt sind.

5. Laderaumsystem nach Anspruch 4, wobei das formstabile Material Graffiti-Schichtstoff, bzw. Pappelsperrholz ist.

6. Laderaumssystem nach einem der vorangehenden Ansprüche, wobei in den seitlichen Haltevorrichtungen (4a, 4b) Fächer zur Aufbewahrung von Objekten vorgesehen sind.

7. Laderaumsystem nach Anspruch 6, wobei die Fächer mit Sicherungsmitteln ausgestattet sind, die verhindern, dass während der Fahrt des Kraftfahrzeugs die in den Fächern aufbewahrten Objekte herausfallen können.

8. Laderaumsystem nach einem der vorangegangenen Ansprüche, wobei die frontseitige Laderaumabtrennung als Sitzbank (8) mit dem Laderaum zugewandter Rückenlehne ausgeführt ist

9. Laderaumsystem nach Anspruch 8, wobei ein Rückhaltenetz (12) vorgesehen ist, das hinter der Rückenlehne der Sitzbank (8) so eingesetzt weren kann, dass es vom Laderaumboden (2) bis zur Decke (21) des Laderaums reicht.

10. Laderaumsystem nach einem der vorangegangenen Ansprüche, wobei das Laderaumsystem eine oder mehrere rückwärtige Abschlusswände (13) umfasst, die zum rückwärtigen Abschließen der von den Unterteilungsmitteln (9) und/oder weiteren Unterteilungsmitteln (10) umfassten Räume geeignet sind.
